# EUROPEAN PATENT APPLICATION

(11) **EP 2 028 098 A2**
(43) Date of publication of application: **25.02.2009**
(21) Application number: 08014469.4
(22) Date of filing: 13.08.2008
(51) Int. Cl.: B62M 23/02

(54) **Pedal pressure monitoring monitoring system for electric assisted bicycle**

(30) Priority: 20.08.2007 TW 96213821 U
(71) Applicant: J.D Components Co., Ltd., Shou Shui Hsiang, Chang Hua Hsien (TW)
(72) Inventor: Liang, Chia-Hsin, Shou Shui Hsiang Chang Hua Hsien (TW)
(74) Representative: Becker Kurig Straus

(57) **Abstract**

Installed in an electric assisted bicycle having a frame body (10), a shock-absorber (12), a battery pack (13), a motor (15) and a chain drive (17) with a first pedal (171) and a second pedal (173) for pedaling by a person riding the bicycle, a pedal pressure monitoring system is disclosed to include two pedal pressure sensor units (20) respectively mounted in the first pedal (171) and the second pedal (173) for detecting the pressure applied by the user's feet and outputting a pedal pressure signal corresponding to the pressured detected, and a main controller (30) electrically connected to the battery pack (13) and the motor (15) for receiving the pedal pressure signal from the pedal pressure sensor units (20) and controlling the operation of the motor (15) and regulating the shock absorbing stroke of the shock absorber subject to the pedal pressure signal received from the pedal pressure sensor units (20).

## Description

### BACKGROUND OF THE INVENTION

### 1. Field of the Invention

The present invention relates to an electric assisted bicycle and more particularly, to a pedal pressure monitoring system for use in an electric assisted bicycle.

### 2. Description of the Related Art

Under the effect of soaring petroleum price, energy-saving transportation vehicles have become the focus of people's concerns. For the advantages of pollution-free and low energy consumption, electric assisted bicycle has been intensively used by people in recent years for exercise, recreation, transport and other activities.

Normally, an electric assisted bicycle determines the power of the motor subject to the pedaling pressure applied by the rider and the set assist ratio of assist power to the pedal-propelling power. Therefore, an electric assisted bicycle has a pedal pressure sensor system to detect the rider's pedaling pressure. According to conventional designs, the sensor is installed in the chain wheel or the wheel axle of the rear wheel of the bicycle to detect the speed of the chain wheel or the bearing pressure of the wheel axle of the rear wheel. The detected signal is converted into a detection signal so that the control system controls the speed of the motor subject to the detection signal.

However, the aforesaid conventional designs are still not satisfactory in function. According to the design that uses a sensor to detect the speed of the chain wheel, the chain wheel keeps rotating when the rider gives no pressure to the pedals. If the rider does not step the feet on the pedals due to an accident, the system will not cut off power supply from the motor immediately. In this case, continuous operation of the motor may cause dangers. According to the design that uses a sensor to detect the bearing pressure of the wheel axle of the rear wheel, the mechanical installation structure of the sensor is complicated, and the related maintenance is also complicated.

Therefore, it is desirable to provide a pedal pressure monitoring system for electric assisted bicycle that eliminates the aforesaid drawbacks.

### SUMMARY OF THE INVENTION

The present invention has been accomplished under the circumstances in view. It is the main object of the present invention to provide a pedal pressure monitoring system for electric assisted bicycle, which accurately monitors the pressure applied by the rider to the pedals of the electric assisted bicycle and raises the safety level of the riding of the electric assisted bicycle.

It is another object of the present invention to provide a pedal pressure monitoring system for electric assisted bicycle, which simplifies the electric wiring of the electric assisted bicycle and facilitates the related maintenance work.

To achieve these and other objects of the present invention, the pedal pressure monitoring system is installed in an electric assisted bicycle. The electric assisted bicycle comprises a frame body, at least one shock-absorber, a battery pack, a motor and a chain drive. Each shock-absorber has a shock absorbing stroke adjusting function. The chain drive comprises a first pedal, a second pedal, a bottom bracket bearing axle coupled between the first pedal and the second pedal, and a chain wheel set mounted on the bottom bracket bearing axle and rotatable with the bottom bracket bearing axle by the first pedal and the second pedal. The pedal pressure monitoring system comprises a pedal pressure sensor unit mounted in the first pedal and adapted for detecting the pressure applied by the feet of a user riding the electric assisted bicycle and outputting a pedal pressure signal corresponding to the pressured detected, and a main controller electrically connected to the battery pack and the motor and adapted for receiving the output pedal pressure signal from the pedal pressure sensor unit and controlling the operation of the motor and the shock absorbing stroke of the at least one shock-absorber subject to the pedal pressure signal received from the pedal pressure sensor unit.

### BRIEF DESCRIPTION OF THE DRAWING

FIG. 1 is a schematic drawing, showing the arrangement of a pedal pressure monitoring system in an electric assisted bicycle in accordance the present invention.

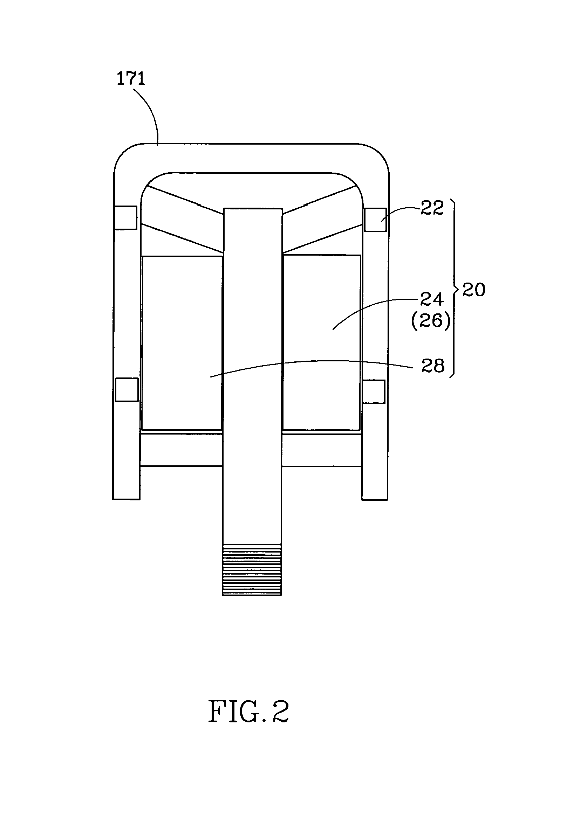

FIG. 2 is a plain view of a part of the pedal pressure monitoring system in accordance with the present invention.

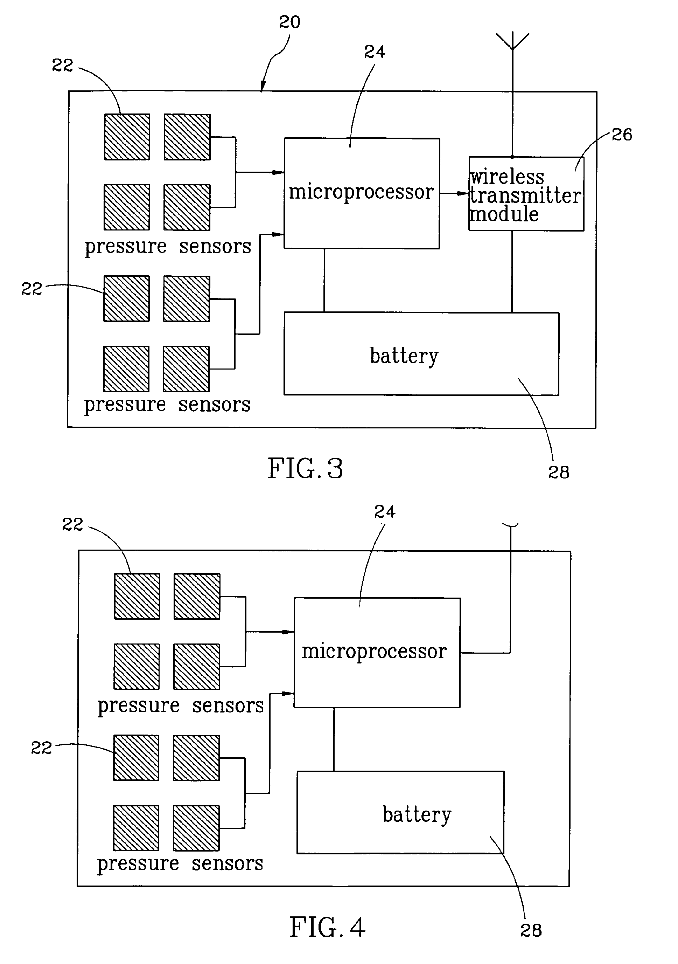

FIG. 3 is a circuit block diagram of the pedal pressure sensor unit of the pedal pressure monitoring system according to the present invention.
FIG. 4 is a circuit block diagram of an alternate form of the pedal pressure sensor unit of the pedal pressure monitoring system according to the present invention.

### DETAILED DESCRIPTION OF THE INVENTION

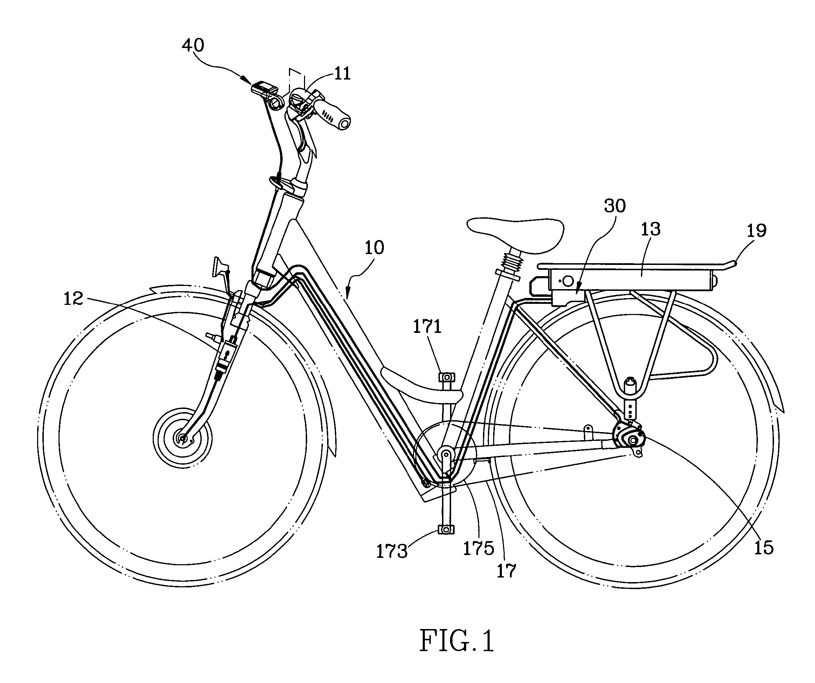

Referring to FIGS. 1∼3, a pedal pressure monitoring system is shown installed in an electric assisted bicycle's frame body **10**. The electric assisted bicycle's frame body **10** comprises handlebars **11**, a front-fork shock-absorber **12**, a battery pack **13**, a motor **15**, a chain drive **17** and a luggage-carrier **19**. The front-fork shock-absorber **12** can be a hydraulic shock-absorber or pneumatic shock-absorber that adjusts its shock absorbing stroke automatically subject to the sloping status or condition of the road. The battery pack **13** is mounted in the bottom side of the luggage-carrier **19** to provide the electric assisted bicycle with the necessary working voltage. The chain drive **17** is installed in the bottom side of the frame body **10**, comprising a first pedal **171** and a second pedal **173** for pedaling by the user to rotate a bottom bracket bearing axle (not shown) and a chain wheel set **175** on the bottom bracket bearing axle. When the user is pedaling the pedals **171** and **173**, the chain wheel set **175** is driven to move the bicycle. According to this embodiment, the chain wheel set **175** comprises a chain wheel, a chain and a rear derailleur. Alternatively, the chain wheel set **175** can be comprised of a chain wheel, a chain and a sprocket.

The pedal pressure monitoring system comprises two pedal pressure sensor units **20**, a main controller **30** and a sub-controller **40**.

The pedal pressure sensor units **20** are respectively mounted in the first pedal **171** and second pedal **173** of the chain drive **17**. Each pedal pressure sensor unit **20** comprises a plurality of pressure sensors **22**, a microprocessor **24**, a wireless transmitter module **26** and a battery **28**. The pressure sensors **22** are respectively embedded in the top and bottom sides of the pedal **171** or **173** (the two opposite pedaling sides) to detect the pressure applied by the user to the pedal **171** or **173** and to send detected pressure signal to the microprocessor **24** for processing into a pedal pressure signal, which is then modulated by the wireless transmitter module **26** and then sent by the wireless transmitter module **26** to the main controller **30** wirelessly. The battery **28** can be regular battery cell or rechargeable battery that provides the respective pedal pressure sensor unit **20** with the necessary working voltage. Further, the microprocessor **24** and the wireless transmitter module **26** can be modularized in one same module.

The main controller **30** and the sub-controller **40** are respectively mounted in the bottom side of the battery pack **13** and the handlebars **11**. The main controller **30** is electrically connected to the sub-controller **40**, the front-fork shock-absorber **12**, the battery pack **13** and the motor **15,** having therein a wireless receiver module (not shown) for receiving wireless pedal pressure signals from the wireless transmitter modules **26** of the pedal pressure sensor units **20** so that the main controller **30** can control the operation of the motor **15** subject to the value of the pedal pressure signals received from the pedal pressure sensor units **20**. During operation, the main controller **30** sends the related operation data to the sub-controller **40**, which displays the related data through a display module (not shown) thereof for viewing by the user.

When the user is riding the electric assisted bicycle, the pressure sensors **22** of the pedal pressure sensor units **20** sense the pressure applied by the user to the pedals **171** and **173** so that the pedal pressure sensor units **20** send a respective modularized pressure signal to the wireless receiver module of the main controller **30**, for enabling the main controller **30** to control the operation of the motor **15** subject to the value of the pedal pressure signals received from the pedal pressure sensor units **20** and to have the related data be displayed on the display module of the sub-controller **40**. Further, the invention can be used with an assisting power control system that is commonly used in regular electric assisted bicycles, i.e., the default value or user's setting in the main controller **30** matches with the detected signal provided by the pedal pressure sensor units **20** to control the output power of the motor **15**.

Preferably, the main controller **30** can be configured to control the shock absorbing stroke of the front-fork shock-absorber **12** subject to the value of the pedal pressure signals received from the pedal pressure sensor units **20**, when the rider is riding the bicycle on a slope and giving a relatively greater pressure to the pedals **171** and **173**, the main controller **30** controls the motor **15** to output a relatively greater driving power and simultaneously locks the shock absorbing stroke of the front-fork shock-absorber **12**, preventing reduction in pedaling efficiency. When the rider is riding the bicycle over a bad road, the main controller **30** regulates the front-fork shock-absorber **12** to have a relatively greater shock absorbing stroke. According to this embodiment, the main controller **30** controls the operation of the front-fork shock-absorber **12.** It is to be understood that the invention can also be used to control any other shock-absorbers.

Further, when the user's feet give no pressure to the pressure sensors **22**, i.e., when the rider's feet are kept in slight contact with the pedals **171** and **173**, the main controller **30** stops the motor **15**. If the rider's feet are not rested on the pedals **171** and **172** due to an accidental condition, the invention automatically switches off the motor **15,** preventing an accident. By means of the sensing mode and installation position of the pedal pressure sensor units **20**, the pedal pressure of the electric assisted bicycle is accurately monitored. Further, it is easy to install the pedal pressure sensor units **20** in the pedals **171** and **173**. Further, by means of wireless transmission, the invention simplifies the electric wiring of the bicycle and facilitates the related maintenance work.

Further, the invention can have the following modifications:

For example, the pedal pressure monitoring system can be configured to have only one single pedal pressure sensor unit **20** that can be installed in the first pedal **171** or the second pedal **173;** the pressure sensors **22** can be mounted only in one single side (the top or bottom side) of the pedal **171** or **173**. These modifications save much the installation cost and can effectively monitor the rider's applied pressure

Further, the pedal pressure sensor units **20** may be electrically connected to the main controller **30** by an electrical wire, and may obtain the necessary working voltage from the battery pack **13** of the bicycle directly. In this case, the aforesaid wireless transmitter module **26** and battery **28** can be eliminated, saving the cost.

In conclusion, the use of the present invention in an electric assisted bicycle accurately monitors the pedal pressure. Further, the invention can also be used as a safety switch, assuring riding safety. By means of the application of a wireless transmission mode, the invention simplifies the electric wiring of the electric assisted bicycle and facilitates the related maintenance work.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A pedal pressure monitoring system installed in an electric assisted bicycle, said electric assisted bicycle comprising a frame body (10), at least one shock-absorber (12), a battery pack (13), a motor (15) and a chain drive (17), each said shock-absorber (12) having a shock absorbing stroke adjusting function, said chain drive (17) comprising a first pedal (171), a second pedal (173), a bottom bracket bearing axle coupled between said first pedal (171) and said second pedal (173) and a chain wheel set mounted on said bottom bracket bearing axle and rotatable with said bottom bracket bearing axle by said first pedal (171) and said second pedal (173), said pedal pressure monitoring system being **characterized in that** comprising:
a pedal pressure sensor unit (20) having a plurality of pressure sensors (22) mounted in said first pedal (171) and adapted for detecting the pressure applied by the feet of a user riding said electric assisted bicycle and outputting a pedal pressure signal corresponding to the pressured detected; and
a main controller (30) electrically connected to said battery pack (13) and said motor (15) and adapted for receiving the output pedal pressure signal from said pedal pressure sensor unit (20) and controlling the operation of said motor (15) subject to the pedal pressure signal received from said pedal pressure sensor unit (20).

2. The pedal pressure monitoring system as claimed in claim 1, wherein said pressure sensors (22) of the pedal pressure sensor unit (20) are mounted in at least one of top and bottom sides of the first pedal.

3. The pedal pressure monitoring system as claimed in claim 1, wherein the number of said pedal pressure sensor unit (20) is two, and the two pedal pressure sensor units (20) are respectively installed in said first pedal (171) and said second pedal (173).

4. The pedal pressure monitoring system as claimed in claim 3, wherein said pressure sensors (22) of the pedal pressure sensor units (20) are mounted in at least one of top and bottom sides of the associated pedal (171)(173).

5. The pedal pressure monitoring system as claimed in claim 1, wherein said main controller (30) is electrically connected with said at least one shock-absorber (12) and adapted for regulating the shock absorbing stroke of said at least one shock-absorber (12) subject to the pedal pressure signal received from said pedal pressure sensor unit (20).

6. The pedal pressure monitoring system as claimed in claim 1, wherein said main controller (30) is adapted for receiving the output pedal pressure signal from said pedal pressure sensor unit (20) through a wireless transmission mode.

7. The pedal pressure monitoring system as claimed in claim 1, wherein each said pedal pressure sensor unit (20) further comprises a microprocessor electrically connected with said pressure sensors (22) and adapted for processing the pressure detected by said pressure sensors (22) into a pedal pressure signal.

8. The pedal pressure monitoring system as claimed in claim 7, wherein each said pedal pressure sensor unit (20) further comprises a wireless transmitter module (26) electrically connected with said microprocessor and adapted for transmitting said pedal pressure signal to said main controller (30) wirelessly.

9. The pedal pressure monitoring system as claimed in claim 8, wherein said main controller (30) comprises a wireless receiver module adapted for receiving said pedal pressure signal from said wireless transmitter module (26) wirelessly.

10. The pedal pressure monitoring system as claimed in claim 8, wherein each said pedal pressure sensor unit (20) further comprises a battery (28) electrically connected to said wireless transmitter module (26) to provide said wireless transmitter module (26) with the necessary working voltage.

11. The pedal pressure monitoring system as claimed in claim 1, further comprising a sub-controller (40) electrically connected to said main controller (30) and controllable by said main controller (30) to display traveling data of said electric assisted bicycle.
